Europäisches Patentamt

European Patent Office

Office européen des brevets

(19)

(11) Numéro de publication : **0 076 773**
**B1**

(12)                    **FASCICULE DE BREVET EUROPÉEN**

(45) Date de publication du fascicule du brevet :
18.09.85

(21) Numéro de dépôt : 82430025.5

(22) Date de dépôt : 22.09.82

(51) Int. Cl.⁴ : **H 01 R 43/28,** H 02 G   1/12,
H 05 K 13/06

(54) **Procédé et machine pour découper dans un fil électrique des tronçons de longueurs déterminées et pour traiter et équiper les deux extrémités de ces tronçons.**

(30) Priorité : 24.09.81 FR 8118181

(43) Date de publication de la demande :
13.04.83 Bulletin 83/15

(45) Mention de la délivrance du brevet :
18.09.85 Bulletin 85/38

(84) Etats contractants désignés :
BE CH DE GB IT LI SE

(56) Documents cités :
EP-A- 0 007 681
US-A- 3 479 717
US-A- 3 957 092

(73) Titulaire : AUTOMATISMES ET TECHNIQUES AVAN-
CEES - A.T.A.
Route de Trets
F-13970 la Barque (FR)

(72) Inventeur : Loustau, Désiré
Résidence Le Capri Bâtiment C2 Rue de Cuques
F-13100 Aix-en-Provence (FR)

(74) Mandataire : Azais, Henri et al
c/o CABINET BEAU DE LOMENIE 14, rue Raphael
F-13008 Marseille (FR)

EP 0 076 773 B1

Jouve, 18, rue St-Denis, 75001 Paris, France

## Description

La présente invention a pour objet un procédé et une machine pour découper, dans un fil électrique, des tronçons de longueurs déterminées et pour traiter et équiper les deux extrémités de ces tronçons.

Le secteur technique de l'invention est celui de la construction des machines du type automates ou robots.

De nombreux circuits électriques en courants faibles nécessitent des bouts de fils de longueur déterminée, dont les extrémités sont traitées pour les dénuder, les étamer et pour y fixer différents équipements de connexion tels que des cosses, des douilles, des fiches, des isolants.

On utilise de tels fils par exemple pour équiper des armoires ou tableaux de relais, comme faisceaux électriques des véhicules automobiles ou d'avions, pour équiper des installations téléphoniques etc...

Les fils électriques isolés par une gaine en matière plastique sont livrés en bobines ou tourets de grande longueur et on connaît déjà des machines qui comportent une dérouleuse de fil, un codeur ou capteur qui comporte deux galets, entre lesquels passe le fil, qui mesure la longueur de fil qui défile et qui émet un signal lorsque cette longueur atteint une valeur prédéterminée, un dispositif de coupe qui cisaille le fil lorsque le capteur précédent a mesuré la longueur prédéterminée et deux dénudeurs situés de part et d'autre du dispositif de coupe qui permettent de retirer un bout de gaine isolante pour dénuder les deux extrémités de fil situées de part et d'autre de la découpe.

Ces machines connues débitent des lots de tronçons de fil rectilignes de même longueur, ayant deux extrémités dénudées.

On a adjoint à ces machines des convoyeurs perpendiculaires aux bouts de fil sortant de la machine, qui déplacent ceux-ci un à un transversalement pour présenter une des deux extrémités sur les postes de fixation automatique d'équipements de connexion tels que des cosses, douilles, fiches etc...

Ces machines connues ne permettent de traiter qu'une des deux extrémités de chaque bout de fil.

Pour traiter la deuxième extrémité de chaque tronçon de fil, on doit leur adjoindre des dispositifs qui avalent chaque tronçon de fil rectiligne pour le déplacer parallèlement à lui-même afin d'amener la deuxième extrémité devant un poste de fixation d'équipements, ce qui conduit à des automates complexes.

Un des objectifs de la présente invention est de procurer des automates comportant des moyens de manutention automatique du fil qui permettent de découper celui-ci en bouts de longueur déterminée et de présenter ensuite les deux extrémités de chaque tronçon de fil côte à côte et parallèles en regard de postes de traitement situés d'un même côté du convoyeur, de telle sorte que l'on puisse traiter les deux extrémités simultanément ou séparément, sans avoir à faire d'autres manutentions des bouts de fil.

Un autre objectif de la présente invention est de procurer des automates qui permettent de découper le fil en bouts de fils qui ont chacun une longueur déterminée, mais qui peuvent se succéder avec des longueurs différentes, de telle sorte que l'on peut obtenir à la sortie de la machine des lots de bouts de fils équipés ayant des longueurs différentes et qui correspondent par exemple au faisceau de bouts de fils nécessaires pour l'équipement électrique d'une voiture ou d'une partie d'avion.

Les objectifs de l'invention sont atteints par un procédé suivant lequel on dévide le fil dans une direction rectiligne, on forme dans le fil en cours de dévidement des boucles de longueur déterminée, dont les deux extrémités sont maintenues par deux dispositifs de serrage rapprochés portés par un convoyeur de transfert comme décrit dans le document EP-A-1 681. Selon l'invention, le procédé est caractérisé par le fait que les deux dispositifs sont portés par un convoyeur de transfert, qui est tangent à la direction de dévidement du fil, on fait avancer ledit convoyeur et lesdites boucles maintenues par les dispositifs de serrage jusqu'à un poste de sectionnement qui coupe ledit fil entre deux boucles et on fait pivoter d'un quart de tour en sens inverse l'un de l'autre, les deux dispositifs de serrage dans le sens qui amène les deux extrémités de chaque tronçon de fil à se présenter transversalement audit convoyeur et à déborder à la périphérie de celui-ci.

Une machine selon l'invention comporte :
— un poste de déroulement du fil dans une direction rectiligne ; et la machine est caractérisée par :
— un convoyeur de transfert qui porte des paires d'étaux rapprochés réparties sur sa périphérie, laquelle périphérie est tangente à ladite direction de déroulement, à proximité de l'extrémité avant dudit poste de déroulement ;
— un balancier situé à l'extrémité avant dudit poste de déroulement et monté pivotant sur un axe parallèle à la direction de dévidement du fil, lequel balancier porte un galet presseur qui appuie ledit fil contre un galet d'entraînement pour former des boucles ;
— un poste de sectionnement du fil situé perpendiculairement audit convoyeur en avant dudit poste de déroulement ;
— et des moyens pour faire pivoter les deux étaux de chaque paire d'un quart de tour en sens inverse l'un de l'autre après ledit poste de sectionnement, afin de faire pivoter d'un quart de tour les deux extrémités de chaque boucle situées au delà desdits étaux pour les faire passer d'une direction tangentielle à une direction transversale audit convoyeur dans laquelle elles débordent à l'extérieur de la périphérie dudit convoyeur.

L'invention a pour résultat une machine du type automate ou robot qui dévide le fil, qui le découpe en tronçons de longueurs déterminées et qui effectue sur les deux extrémités de chaque tronçon toutes les opérations de traitement et de pose d'équipements de connexion électrique.

La confection de boucles de longueur déterminée dans le fil qui se dévide permet d'obtenir des tronçons de fil de longueur voulue, dont les deux extrémités sont maintenues par deux moyens de serrage rapprochés, qui sont situés à une même distance l'un de l'autre, quelle que soit la longueur de la boucle.

Cette confection de boucles présente de nombreux avantages. Elle permet de dissocier entièrement la détermination de la longueur de chaque tronçon de l'opération de sectionnement du fil. Elle permet, grâce à une rotation des deux étaux qui tiennent les deux extrémités de chaque tronçon de présenter ces deux extrémités, l'une à côté de l'autre, débordant perpendiculairement à l'extérieur du convoyeur qui porte les étaux. Il en résulte que l'on peut disposer un grand nombre de postes ou d'unités de traitement à la périphérie du convoyeur de transfert et que ces unités de traitement peuvent traiter ou équiper simultanément les deux extrémités de chaque tronçon ou une seule.

Comme les paires d'étaux sont uniformément réparties à la périphérie du convoyeur, on peut faire avancer le convoyeur de transfert chaque fois d'un angle qui correspond à l'écart angulaire entre deux paires successives d'étaux et disposer les unités de traitement en face des positions d'arrêt des extrémités des tronçons, de sorte que pendant chaque temps d'arrêt du convoyeur, toutes les unités de traitement peuvent opérer simultanément, chacune sur les deux extrémités d'un tronçon.

Du fait que les positions des extrémités à traiter sont totalement indépendantes de la longueur des boucles, il est possible de confectionner successivement des tronçons ayant des longueurs déterminées différentes et d'obtenir ainsi à la sortie de la machine des assortiments de tronçons de fils de différentes longueurs correspondant par exemple aux longueurs nécessaires pour un faisceau de fils électriques d'un véhicule. Cette possibilité n'existe pas sur les machines connues qui débitent des tronçons de fils de même longueur qui doivent être ensuite reclassés pour obtenir des faisceaux de fils de différentes longueurs.

L'entraînement du fil dans l'unité de dévidement au moyen d'un moteur pas à pas et d'une courroie crantée permet de déterminer avec une précision suffisante, la longueur de chaque tronçon en déterminant le nombre de pas pendant lequel le moteur de dévidement fonctionne au cours de la formation de chaque boucle.

L'adjonction d'un codeur qui mesure la longueur de fil dévidé et d'une unité logique qui compare la mesure de longueur indiquée par le codeur avec la mesure de longueur découlant du nombre de pas de fonctionnement du moteur de dévidement, permet d'arrêter la machine en cas d'erreur ou de réétalonner automatiquement la machine et d'éviter ainsi que celle-ci ne débite automatiquement des quantités de tronçons de fils ne correspondant pas aux longueurs voulues.

Le convoyeur constitué par un plateau circulaire entraîné par un groupe motoréducteur comportant un réducteur cycloïdal à très faible jeu de denture permet d'obtenir une très grande précision, de l'ordre de 0,1 mm dans le positionnement des extrémités des tronçons de fil pendant des temps d'arrêt du convoyeur et cette précision est nécessaire pour certaines unités de traitement, notamment celles qui doivent enfiler une gaine ou une douille tubulaire de petit diamètre sur les extrémités du fil.

La description suivante se réfère aux dessins annexés, qui représentent, sans aucun caractère limitatif, un exemple de réalisation d'une machine selon l'invention.

La figure 1 est une vue d'ensemble en plan de la machine.

Les figures 2 et 3 sont une vue en élévation et une vue de dessus du poste de déroulement du fil et la figure 9 une vue de l'avant.

Les figures 4 et 5 sont une vue de dessus, et une coupe axiale d'un étau.

La figure 6 est une vue en perspective d'une mâchoire d'étau.

La figure 7 est une coupe verticale du poste de sectionnement du fil.

La figure 8 est une coupe transversale selon VIII-VIII de la figure 7.

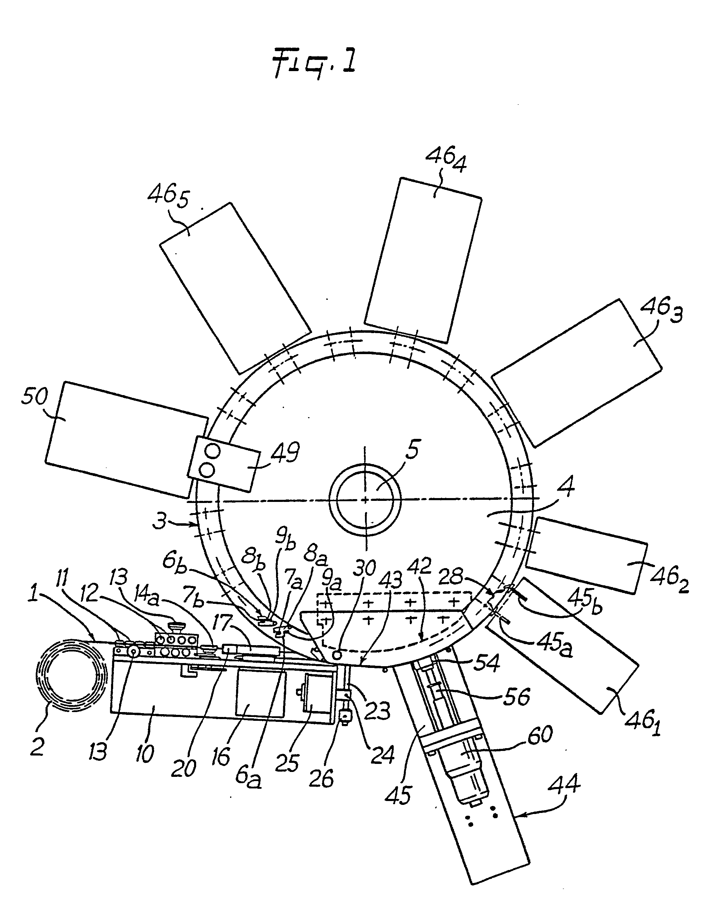

La figure 1 représente une vue en plan d'une machine de type automate ou machine transfert, qui dévide un fil électrique 1 enroulé sur une bobine 2, qui le découpe en tronçons de longueur déterminée, qui dénude les extrémités, qui traite les deux extrémités de chaque tronçon par exemple pour fixer sur celles-ci, sans aucune intervention manuelle, divers équipements de connexion tels que des cosses, des douilles, des fiches ou pour les étamer.

La machine selon l'invention comporte un convoyeur de transfert sans fin ou carrousel 3, autour duquel sont disposés divers postes, modules ou unités effectuant automatiquement les diverses opérations nécessaires au traitement et à l'équipement des deux extrémités de chaque tronçon de fil.

Dans l'exemple représenté, le convoyeur de transfert 3 comporte un plateau circulaire 4, qui est entraîné en rotation par un groupe motoréducteur 5, équipé d'un moteur pas à pas et d'un réducteur cycloïdal à jeu de denture très réduit. Le moteur pas à pas effectue par exemple un tour pour 200 pas et le réducteur a un rapport de démultiplication de l'ordre de 1/50, de sorte que le déplacement linéaire de la périphérie du disque 4 est de l'ordre de 0,1 mm par pas.

De plus, le réducteur à jeu de denture réduit permet une très grande précision des positions d'arrêt qui est de l'ordre de 0,1 mm sur le positionnement périphérique.

Cette grande précision est importante pour la bonne présentation des extrémités des fils en regard des postes de traitement.

Le plateau circulaire 4 pourrait être remplacé par d'autres types de convoyeurs sans fin, par exemple des convoyeurs à chaîne de forme non circulaire. Toutefois, la réalisation sous la forme d'un plateau circulaire est un mode de réalisation préférentiel par suite de la rigidité du plateau et de la bonne précision du positionnement périphérique qui en résulte.

Le plateau 4 a un diamètre externe suffisant pour qu'on puisse disposer à sa périphérie des divers postes de traitement nécessaires. Par exemple, le diamètre du plateau 4 est de l'ordre d'un mètre.

Le plateau 4 porte à sa périphérie des paires d'étaux rapprochés 6a, 6b, régulièrement réparties. Pour la clarté du dessin, on a représenté sur la figure 1 deux paires d'étaux seulement. Chaque étau est monté sur un axe perpendiculaire au plateau, respectivement 7a, 7b, et comporte un bras 8a, 8b qui est normalement maintenu appuyé contre une butée 9a, 9b par un ressort spiral. Les ressorts spiraux agissent en sens inverse l'un de l'autre. Dans l'exemple représenté l'étau avant 6a de chaque paire est poussé contre la butée 9a dans le sens trigonométrique, tandis que l'étau arrière 6b de chaque paire est poussé dans le sens des aiguilles d'une montre.

Les étaux seront décrits en détail ultérieurement.

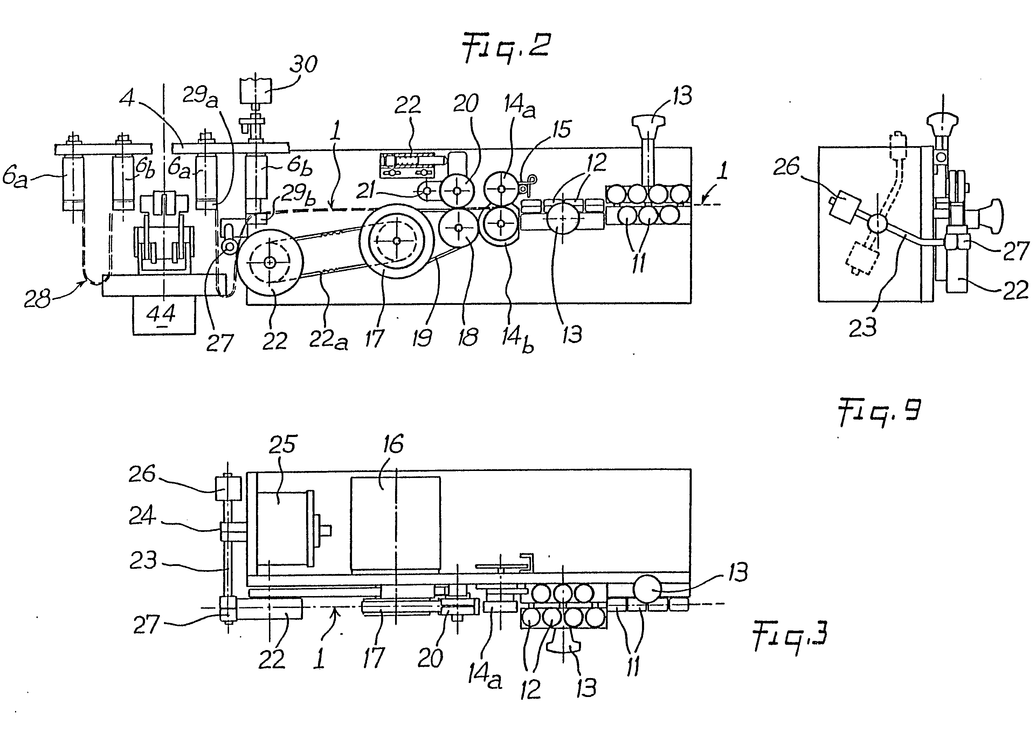

La machine selon l'invention comporte un premier poste 10 ou module d'entrée du fil, qui dévide le fil 1 enroulé sur la bobine 2. L'unité 10 de déroulement du fil est représentée en détail sur les figures 2 et 3.

On voit sur la figure 1 que le poste de déroulement 10 est placé tangentiellement au plateau 4, de sorte que le fil qui sort à l'extrémité avant du module 10, parallèlement à ce module, arrive tangentiellement au-dessous de la périphérie du plateau 4.

Par convention, on appelle extrémité avant du module 10 l'extrémité située du côté de la sortie du fil et extrémité arrière, l'extrémité située du côté de la bobine 2.

Le poste de déroulement 10 comporte, de façon connue, sur sa face latérale située du côté du convoyeur 4, des jeux de paires de galets 11 situés dans les plans verticaux et 12 situés dans des plans horizontaux entre lesquels passe le fil 1. Ces galets ont pour fonction de redresser le fil 1 au cas où il serait plié ou tordu.

Les galets sont montés sur des supports que l'on peut rapprocher plus ou moins l'un de l'autre au moyen de tiges filetées munies d'un bouton de manœuvre 13 afin de tenir compte du diamètre du fil électrique.

Le poste 10 comporte ensuite une paire de galets 14a, 14b qui sont montés fous sur leur axe et entre lesquels passe le fil 1. Le galet supérieur 14a est maintenu appuyé contre le fil par un ressort 15.

L'un des galets est entraîné en rotation par le fil et il entraîne un codeur incrémental qui délivre des impulsions en nombre proportionnel à la longueur du fil passant à travers le codeur. Ce codage est obtenu par exemple au moyen d'un disque perforé qui est entraîné par le galet 14a et qui défile entre une source lumineuse et une cellule photo-électrique ou par tout autre capteur de tours équivalent.

Le poste de déroulement du fil comporte un moteur pas à pas 16 qui entraîne une poulie 17 entraînant un galet 18 par l'intermédiaire d'une courroie crantée 19 de sorte qu'il n'y a aucun glissement entre les poulies et la courroie.

Le brin supérieur de la courroie crantée se déplace vers l'avant et il est situé dans le plan horizontal passant par le fil 1. Au-dessus de la poulie 18 se trouve un galet presseur 20 qui est articulé autour d'un axe 21 et qui est maintenu appuyé contre le fil par un ressort 22. La génératrice inférieure du galet presseur 20 est située légèrement en avant de la génératrice supérieure du galet 18, de sorte qu'il appuie le fil contre la partie rectiligne du dos de la courroie crantée 19 et qu'il n'y a aucun glissement entre le fil et la courroie.

Le moteur pas à pas est commandé par une unité de programmation qui le fait tourner chaque fois d'un nombre de pas correspondant à la longueur du tronçon de fil voulue.

Il n'est pas nécessaire de découper des tronçons de fil dont la longueur soit déterminée avec une très grande précision et le moteur pas à pas 16 comporte par exemple 200 pas par tour, chaque pas correspondant à une course d'un millimètre de la courroie crantée.

A l'avant de la face latérale située du côté du convoyeur 4, le poste de déroulement comporte un galet lisse 22, qui est entraîné en rotation par une deuxième courroie crantée 22a, entraînée par le moteur pas à pas 16. Le galet 22 est situé au-dessous du plan horizontal passant par le fil 1.

A l'extrémité avant, le poste de déroulement comporte un balancier 23 qui est monté sur un axe 24 parallèle au fil et qui est entraîné en rotation d'un quart de tour environ par un électro-aimant rotatif 25. Le balancier 23 porte, à une extrémité, un contrepoids 26 et à l'autre extrémité, un galet à gorge 27 qui vient appuyer le fil 1 contre le galet 22 lorsque le balancier est en position horizontale.

Les galets 27 et 22 ont pour fonction de guider le fil 1 pour qu'il forme des boucles 28 de longueur déterminée.

On a représenté sur la figure 2 une partie du plateau 4 et une paire d'étaux 6a, 6b portés par celui-ci, dans la positon qu'ils occupent pendant la formation d'une boucle.

Au début de la formation d'une boucle 28, le programmateur commande un électro-aimant 30 qui se trouve placé à poste fixe à la verticale de la position que vient occuper l'axe de l'étau 6a et dont le noyau plongeur vient appuyer sur la valve de l'étau 6a, ce qui provoque la fermeture de la mâchoire 29a de l'étau 6a. Le fil 1 se trouve donc serré dans l'étau 6a. Le programmateur commande ensuite la mise en route du convoyeur de transfert pour le faire avancer d'une longueur égale à celle qui sépare l'étau 6a de l'étau 6b, de sorte que l'étau 6b vient se placer sous l'électro-aimant 30.

Le moteur pas à pas 16 entraînant l'unité de dévidement tourne en même temps.

Lorsque l'étau 6b est arrivé sous l'électro-aimant 30, on arrête le convoyeur de transfert 3, tandis que le moteur pas à pas 16 continue à tourner. L'unité de programmation commande l'électro-aimant rotatif 25 qui fait basculer le balancier 23.

Le galet 27 entraîne le fil 1 vers le bas et vient l'appuyer contre le galet d'entraînement 22. Le diamètre de la poulie d'entraînement du galet 22 est calculé de telle sorte que la vitesse linéaire de la périphérie du galet 22 soit très légèrement supérieure à la vitesse linéaire de la courroie crantée 19, de sorte que le brin de fil 1, qui se trouve entre la paire de galets 18, 20 et la paire de galets 22, 27 est légèrement tendu et que le fil est positionné correctement dans la mâchoire 29b, lors de la fermeture de celle-ci.

Lorsque le moteur pas à pas 16 a effectué un nombre de pas correspondant à la longueur programmée du tronçon de fil, il s'arrête et le programmateur commande l'électro-aimant 30 qui commande la fermeture de la mâchoire 29b du deuxième étau.

On a ainsi confectionné une boucle de fil 28, de longueur déterminée, dont les deux extrémités sont tenues par les deux étaux 6a, 6b d'une paire.

L'unité de programmation commande ensuite le relevage du balancier 23 puis la marche du moteur 5 pendant un nombre de pas qui correspond à l'écart angulaire entre un étau 6a et l'étau 6b de la paire suivante afin d'amener celle-ci à la place de la précédente pour former une nouvelle boucle.

En même temps, l'unité de programmation commande la marche du moteur pas à pas 16, pendant un nombre de pas qui correspond à une course de la courroie 19 égale à la distance qui sépare un étau 6a de l'étau 6b de la paire voisine.

Les impulsions qui sont envoyées sur les deux moteurs pas à pas 5 et 16 pendant cette marche simultanée, sont synchronisées et les amplitudes varient parallèlement afin que les accélérations et les vitesses de la périphérie du convoyeur de la courroie crantée soient égales à tout instant et que le fil reste tendu sans excès.

Le moteur pas à pas 16 est commandé par des impulsions de tension dont la fréquence croît et décroît suivant les rampes progressives afin d'éviter des accélérations ou décélérations trop brutales, qui pourraient amener des dérapages du fil sur la courroie crantée 19 qui introduiraient des erreurs de mesure des longueurs de tronçons de fil.

Le codeur incrémental associé au galet 14a, permet de détecter des erreurs de mesure.

La machine comporte une unité logique qui compare la longueur de fil réellement dévidée qui est mesurée par le codeur et la longueur de fil théoriquement dévidée en fonction du nombre de pas du moteur 16.

Les distorsions brutales entre ces deux informations correspondent à des incidents tels que dérapage du fil, blocage du fil, perte de pas du moteur etc... et leur détection par l'unité logique déclenche un arrêt d'urgence et une signalisation de défaut. Les distorsions lentes et de faible amplitude dérivent d'une variation de longueurs de fil dévidé par pas du moteur et leur détection donne lieu à une correction automatique de la longueur par pas du moteur 17 pour rétablir la coïncidence entre les deux informations.

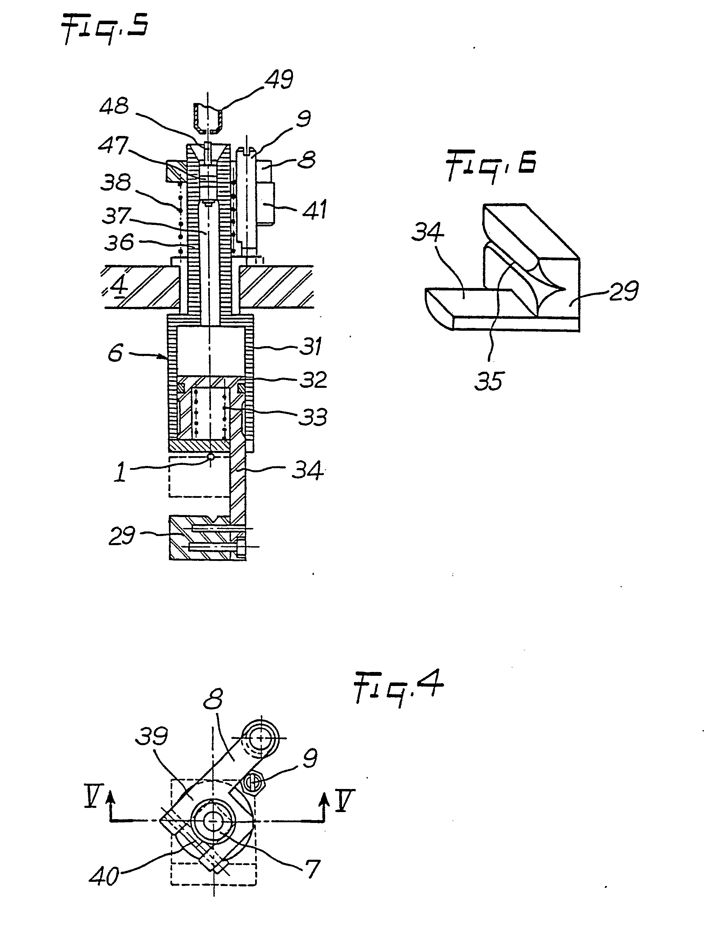

La figure 4 est une vue de dessus d'un étau 6 équipant le plateau 4.

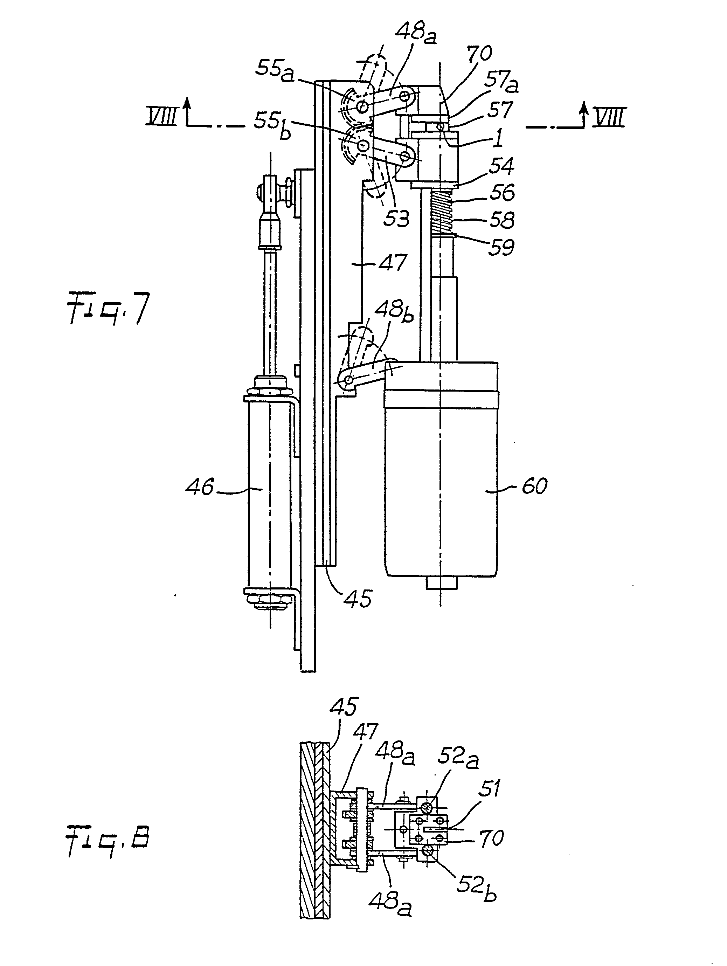

La figure 5 est une coupe axiale selon V-V de la figure 4.

La figure 6 est une vue en perspective de la mâchoire 29 d'un étau.

On retrouve sur la figure 4 une vue de dessus des étaux analogue à celle de la figure 1, sur laquelle on voit l'axe vertical 7, le bras 8 et la butée fixe 9 fixée au plateau 4.

On voit sur la figure 5 que chaque étau 6 comporte un corps de vérin cylindrique vertical 31 à l'intérieur duquel coulisse un piston 32 poussé par un ressort 33. Le piston est prolongé par une tige 34 qui se prolonge au delà de l'extrémité inférieure du corps de vérin et qui porte, à son extrémité inférieure, une mâchoire 29 appuyée contre l'extrémité inférieure du corps de vérin comme on l'a représenté en pointillés sur la figure 5 et le fil 1 se trouve alors serré entre le fond du corps de vérin et la mâchoire 29 qui comporte une gorge 35 dans laquelle le fil est bloqué.

La figure 6 représente en prespective une mâchoire 29 portée par une tige 34 et portant une gorge 35.

Le corps cylindrique 31 est prolongé vers le haut par une colonne 36 percée d'un conduit axial 37 alimentant le cylindre du vérin en air comprimé. La colonne 36 traverse le plateau et sert d'axe de rotation vertical autour duquel le vérin peut faire un quart de tour. Un ressort spiral 38 est placé autour de la colonne 36. Le bras 8 porte un étrier en forme de fourche 39 qui est serré par un boulon 40 sur l'extrémité supérieure carrée ou polygonale de la colonne 36.

Le ressort spiral 38 maintient le bras 8 appuyé contre la butée verticale 9. Le ressort spiral 38 peut être doublé d'un ressort hélicoïdal, qui permet un déplacement axial des étaux lorsqu'il est comprimé. Un tel déplacement axial est utile sur certains postes de travail.

Le bras 8 porte à son extrémité libre, un galet 41 qui vient en appui sur une came 42 ou 43, visible sur la figure 1.

Les galets 41 des étaux 6a viennent en appui sur la came 42 qui fait tourner les étaux d'un quart de tour dans le sens trigonométrique. Les galets 41 des étaux 6b viennent en appui sur la came 43 qui les fait tourner d'un quart de tour dans le sens des aiguilles d'une montre.

Les cames 42 et 43 sont placées au-dessus du plateau 4 à l'avant de l'extrémité avant du poste de dévidement 10. Elles s'étendent un peu au delà d'un poste 44 de sectionnement du fil qui se trouve à l'avant du poste de déroulement 10.

Lorsque les galets 41 échappent aux cames 42 et 43, les étaux pivotent d'un quart de tour en sens inverse l'un de l'autre sous l'action de ressorts spiraux 38 et viennent en appui contre les butées 9. Cette rotation d'un quart de tour en sens inverse a pour effet de faire tourner d'un quart de tour les deux extrémités 45a, 45b de chaque boucle 28 de fil, situées au delà des deux étaux 6a et 6b qui portent la boucle, ce qui fait passer les deux extrémités libres d'une direction tangentielle à une direction transversale ou radiale au plateau 4, dans laquelle elles débordent à l'extérieur de la périphérie du plateau 4, comme on le voit sur la figure 1, de sorte qu'elles se présentent dans cette position, aux divers postes ou unités de traitement 46₁, 46₂... 46ₙ, situés à la périphérie du plateau.

Les postes de traitement sont des postes connus qui permettent d'effectuer automatiquemnt des opérations telles que de dénudage des extrémités, le marquage, la pose d'équipements de raccordement tels que des cosses, des douilles, des fiches, le sertissage de ces équipements, la pose de capuchons sur ces pièces de raccordement, l'étamage des extrémités des fils etc...

L'invention n'a pas pour objet la structure de ces unités de traitement automatique qui sont connues individuellement et dont le nombre et la dispositon varient selon les cas. Elle a pour objet le procédé et les machines selon les revendications 1 à 14.

La figure 5 représente un mode de réalisation d'un dispositif de commande de l'ouverture des étaux 6. Celui-ci est constitué par une valve 47, munie d'un poussoir 48, qui obture l'extrémité supérieure du conduit 37.

Pour ouvrir les étaux on renvoie dans ceux-ci, de l'air comprimé au moyen de deux gonfleurs 49 situés au-dessus du plateau 4, à la verticale de la position occupée par les deux étaux 6a et 6b lorsqu'ils se trouvent en regard d'une unité 50 de déchargement des tronçons de fils équipés et traités.

Les gonfleurs 49 envoient alors de l'air comprimé dans les cylindres 31 qui repoussent les pistons 32 et ouvrent les mâchoires 29 des deux étaux. Lorsque le gonfleur recule les valves se referment et les étaux restent ouverts jusqu'à ce qu'ils arrivent sous un électro-aimant 30 qui repousse le poussoir 48 de la valve, ce qui chasse l'air comprimé et ferme l'étau sur le fil 1.

En variante, on peut remplacer les valves par les électrovannes à trois voies placées à l'extrémité de chaque colonne 36 et reliées par une canalisation à une source d'air comprimé. Lorsque les étaux passent en face du poste de déchargement 50, un contact envoie aux électrovannes un ordre d'ouverture qui provoque l'ouverture des étaux. Lorsque les étaux arrivent à l'extrémité avant du poste de déroulement, l'électrovanne de l'étau 6a reçoit un ordre de manœuvre qui met le conduit 37 en communication avec l'atmosphère au début de la formation d'une boucle 28 et l'électrovanne de l'étau 6b reçoit le même ordre à la fin de la formation d'une boucle 28.

Selon une autre variante, on peut remplacer les valves 47 par les électrovannes à deux voies et placer deux gonfleurs en face du poste de déchargement 50. Dans ce cas, lorsque les étaux se trouvent en regard du poste de déchargement, on connecte les électrovannes sur les deux gonfleurs et on les ouvre puis on les ferme. Lorsque les étaux arrivent à l'extrémité avant du poste de déroulement 10, on commande l'ouverture de l'électrovanne équipant l'étau 6a puis l'ouverture de l'électrovanne équipant l'étau 6b respectivement au début et à la fin de la formation de chaque boucle.

La figure 7 représente l'unité 44 de sectionnement du fil que l'on voit en vue de dessus sur la figure 1.

La figure 8 est une coupe transversale selon VIII-VIII de la figure 7.

On a vu sur la figure 1 que le module de sectionnement 44 du fil est disposé radialement par rapport au plateau 4, un peu en avant de l'extrémité avant du module de déroulement et que les cames 42 et 43 s'étendent dans la partie qui est située en face ledit module de sectionnement.

Le module de sectionnement est supporté par une platine 45 qui peut être déplacée radialement par un vérin 46. La platine 45 supporte un bâti 47 en forme de goulotte parallèle à l'axe longitudinal du module. Sur ce bâti 47 sont montées deux paires de biellettes articulées 48a et 48b qui constituent les deux côtés opposés d'un parallélogramme articulé. La biellette 48b supporte le corps d'un vérin 60 par l'intermédiaire d'une articulation. La biellette 48a supporte une mâchoire 70 par une autre articulation.

La figure 8 montre la mâchoire 70 portée par la paire de biellettes 48a. On voit que cette mâchoire 70 comporte une fente verticale 51.

La mâchoire 70 et le corps de vérin 60 sont reliés par deux tirants longitudinaux 52a, 52b qui complètent le parallélogramme articulé.

Le bâti 47 supporte une troisième paire de biellettes 53 qui sont articulées au bâti et à une deuxième mâchoire 54. Les deux paires de biellettes 48a et 53 portent chacune sur leur articulation inférieure un secteur denté 55a, 55b. Ces deux secteurs dentés 55a et 55b engrènent ensemble, de sorte que les mouvements des biellettes 48a et 53 sont symétriques par rapport au plan vertical de symétrie des deux articulations inférieures.

L'extrémité avant de la tige 56 du vérin 60 porte une lame de sectionnement verticale 57 ayant un bord libre 57a découpé en biseau. La lame 57 est montée coulissante dans une fente verticale de la mâchoire 54. Elle a une épaisseur légèrement inférieure à la fente 51 et se situe dans le prolongement de cette fente.

Un ressort 58 est placé autour de la tige 56, entre la face arrière de la mâchoire 54 et une collerette de butée 59.

Le sectionnement du fil est effectué au milieu de la partie rectiligne du fil située entre deux boucles comme on le voit sur la figure 1.

La longueur cumulée des deux bouts de fil situés en dehors de la boucle, au delà des deux étaux qui tiennent une boucle, est égale à la distance fixe qui sépare un étau 6a d'une paire à l'étau 6b de la paire voisine. On tient compte de cette longueur fixe pour déterminer la longueur des boucles.

Pendant l'opération de sectionnement, le plateau 4 est arrêté. L'opération de sectionnement se déroule de la façon suivante. Au moyen du vérin 46, on pousse la platine mobile vers l'avant et les mâchoires du sectionneur s'engagent entre deux paires voisines d'étaux. A ce moment là, les biellettes occupent une position basse représentée en pointillés et les mâchoires se trouvent au-dessous du niveau du fil 1. Lorsqu'un fin de course détecte la mise en place correcte de la platine 45, il commande l'arrêt du vérin 46 et la mise en route du vérin 60. La tige du vérin pousse le ressort 58 qui pousse la mâchoire 54 et fait pivoter les biellettes 53. En même temps, les biellettes 48a pivotent symétriquement et les biellettes 48b pivotent parallèlement aux biellettes 48a.

L'ensemble des mâchoires et du vérin 60 monte au niveau du fil 1 et les deux mâchoires 70 et 54 se referment sur le fil en l'immobilisant de façon rectiligne. A ce moment la mâchoire 54 ne peut plus avancer et la poussée du vérin comprime le ressort 58 et provoque le déplacement relatif vers l'avant de la lame 57 qui cisaille le fil et s'engage dans la fente 51. On obtient ainsi une découpe à l'emporte pièce du fil, sans aucune déformation des deux extrémités du fil. Un fin de course inverse le mouvement du vérin 60, les deux mâchoires s'écartent et reprennent la position en pointillés puis le vérin 46 ramène l'ensemble vers l'arrière et le plateau 4 peut avancer pour présenter en face du poste de sectionnement le milieu des deux boucles suivantes et un nouveau cycle recommence.

Une machine selon l'invention comporte une unité de programmation, par exemple un circuit intégré comportant des mémoires et une unité logique. Les mémoires contiennent les instructions de programme qui déterminent le nombre de pas d'avancement du moteur 16 qui déterminent la longueur des boucles 28 en fonction de la longueur des tronçons de fil qui doivent être fournis par la machine.

Tous les tronçons de fil peuvent avoir la même longueur si l'on désire confectionner des faisceaux de fils de même longueur.

Un avantage d'une machine selon l'invention réside dans le fait que l'on peut programmer des séquences de fabrication de tronçons de fils ayant des longueurs différentes.

L'unité de programmation commande également les cycles de fonctionnement et d'arrêt du moteur pas à pas 5, qui entraîne le convoyeur 3.

Pendant la formation des boucles, le convoyeur 3 est arrêté et les extrémités 45a, 45b des divers tronçons de fil portés par le convoyeur se trouvent placés en face des postes de travail successifs $46_1$, $46_2$... $46_n$ et du poste de déchargement 50 et tous ces postes effectuent simultanément une opération pendant chaque temps d'arrêt du convoyeur 3.

Après quoi l'unité de programation commande le déplacement du convoyeur 3 d'une quantité correspondant à l'écart angulaire entre les paires d'étaux et en même temps, elle commande la marche en synchronisme du moteur pas à pas 16.

Une machine selon l'invention permet également de fabriquer des tronçons de fil comportant plusieurs boucles afin de réduire l'encombrement en longueur qui représenterait une seule boucle ou de conditionner un fil sous une forme repliée en boucles jointives.

Pour arriver à ce résultat, il suffit de ne pas faire fonctionner l'unité de sectionnement pendant plusieurs cycles du convoyeur de transfert.

La figure 9 est une vue de l'extrémité avant du poste de déroulement sur laquelle on voit le balancier 23 portant le contrepoids 26 et le galet presseur 27 qui appuie le fil contre le galet d'entraînement 27.

## Revendications

1. Procédé pour découper dans un fil électrique des tronçons de longueurs déterminées et pour traiter et équiper les deux extrémités desdits tronçons, procédé dans lequel l'on dévide le fil (1) dans une direction rectiligne, on forme dans le fil en cours de dévidement des boucles (28) de longueur déterminée, dont les deux extrémités sont maintenues par deux dispositifs de serrage rapprochés (29a, 29b) portés par un convoyeur de transfert (3), caractérisé en ce que les deux dispositifs sont portés par un convoyeur de transfert qui est tangent à la direction de dévidement du fil, on fait avancer ledit convoyeur et lesdites boucles maintenues par les dispositifs de serrage jusqu'à un poste de sectionnement (44) qui coupe ledit fil entre deux boucles et on fait pivoter d'un quart de tour, en sens inverse l'un de l'autre, les deux dispositifs de serrage dans le sens qui amène les deux extrémités (45a, 45b) de chaque tronçon de fil à se présenter transversalement audit convoyeur et à déborder à la périphérie de celui-ci.

2. Procédé selon la revendication 1, caractérisé en ce que la formation des boucles comporte les opérations suivantes :
— on ferme sur le fil le dispositif de serrage avant (29a) d'une paire de dispositifs de serrage ;
— on fait avancer le convoyeur de transfert (3) d'une longueur égale à la distance entre les deux dispositifs de serrage (29a, 29b) d'une paire en même temps que le moteur (16) de l'unité de déroulement tourne ;
— on arrête le convoyeur de transfert (3) ;
— on fait basculer un balancier (23) qui porte un galet presseur (27) qui vient s'appuyer contre le brin de fil situé entre les deux dispositifs de serrage (16a, 16b) et qui amène ledit fil contre un galet d'entraînement (22) entraîné par ledit moteur (16) ;

— et lorsque ledit moteur (16) a déroulé la longueur de boucle désirée, une unité de programmation commande l'arrêt dudit moteur et la fermeture du deuxième dispositif de serrage (29b) de ladite paire.

3. Machine pour découper dans un fil électrique (1) des tronçons de longueurs déterminées et pour traiter et équiper automatiquement les deux extrémités desdits tronçons, comportant :

— un poste de déroulement du fil (10) dans une direction rectiligne ;

caractérisé par :

— un convoyeur de transfert (3) qui porte des paires d'étaux rapprochés (6a, 6b) réparties sur sa périphérie, laquelle périphérie est tangente à ladite direction de déroulement, à proximité de l'extrémité avant dudit poste de déroulement ;

— un balancier (23) situé à l'extrémité avant dudit poste de déroulement (10) et monté pivotant sur un axe (24) parallèle à la direction de dévidement du fil, lequel balancier porte un galet presseur (27) qui appui ledit fil (1) contre un galet d'entraînement (22) pour former des boucles ;

— un poste de sectionnement du fil (44) situé perpendiculairement audit convoyeur (3) en avant dudit poste de déroulement (10) ;

— et des moyens (42, 43) pour faire pivoter les deux étaux de chaque paire (6a, 6b) d'un quart de tour en sens inverse l'un de l'autre après ledit poste de sectionnement (44) afin de faire pivoter d'un quart de tour les deux extrémités (45a, 45b) de chaque boucle situées au delà desdits étaux pour les faire passer d'une direction tangentielle à une direction transversale audit convoyeur (3) dans laquelle elles débordent à l'extérieur de la périphérie dudit convoyeur.

4. Machine selon la revendication 3, caractérisée en ce que lesdits étaux sont montés pivotants autour d'un axe vertical (7a, 7b), qu'ils comportent un bras radial (8) qui est maintenu appliqué par un ressort spiral (38) contre une butée (9) et qui porte un galet (41) et que lesdits moyens pour faire pivoter lesdits étaux sont constitués par deux cames (42, 43) qui sont placées dans la partie du convoyeur qui s'étend depuis l'extrémité avant du poste de déroulement (10) jusqu'au poste de sectionnement (44) et les galets (41) de chaque étau viennent en appui contre les cames qui font pivoter lesdits étant en sens inverse l'un de l'autre.

5. Machine selon l'une quelconque des revendications 3 et 4, caractérisée en ce que ledit convoyeur de transfert (3) est un plateau circulaire (4) qui est entraîné en rotation par un groupe motoréducteur (5) comportant un moteur pas à pas, dont les temps de fonctionnement et d'arrêt sont déterminés par une unité de programmation, et un réducteur à jeux de denture très réduits qui permettent d'arrêter le plateau dans des positions déterminées avec une très grande précision.

6. Dispositif selon l'une quelconque des revendications 3 à 5, caractérisé en ce que lesdits étaux (6) comportent chacun un vérin pneumatique (31) à axe vertical, une mâchoire d'étau (29) qui est portée par une tige (34) solidaire du piston (32) dudit vérin, un ressort (33) qui tend à repousser ledit piston dans la position rétractée où ladite mâchoire est serrée contre le fond dudit vérin, des moyens (49) pour alimenter ledit vérin en air comprimé qui sont situés au-dessus dudit convoyeur (3) en face du poste (50) de déchargement des tronçons de fil équipés et des moyens (30) pour vider l'air comprimé contenu dans lesdits vérins qui sont situés au-dessus dudit convoyeur (3) à proximité de l'extrémité avant du poste de déroulement (10).

7. Machine selon la revendication 6, caractérisée en ce que lesdits moyens d'alimentation et de mise à l'atmosphère desdits vérins (31) comportent une valve (47) munie d'un poussoir (48) qui est placé à l'extrémité supérieure du conduit d'alimentation (37) de chaque vérin (6), deux gonfleurs (49) qui sont placés au-dessus dudit convoyeur en face ledit poste de déchargement (50) et un électro-aimant (30) qui est placé au-dessus dudit convoyeur à l'extrémité avant du poste (10) de déroulement du fil.

8. Machine selon la revendication 6, caractérisée en ce que lesdits moyens d'alimentation et de mise à l'atmosphère desdits vérins comportent une électrovanne à trois voies qui est placée sur le conduit d'alimentation (37) de chaque vérin (6) et qui est reliée par une canalisation à une source d'air comprimé, qui est ouverte par ladite unité de programmation lorsqu'elle passe devant ledit poste de déchargement (50) et qui est manœuvrée par ladite unité de programmation pour mettre ledit vérin à l'atmosphère lorsqu'elle se trouve à l'extrémité avant du poste de déroulement du fil.

9. Machine selon la revendication 6, caractérisée en ce que lesdits moyens d'alimentation et de mise à l'atsmosphère desdits vérins comportent une électrovanne à deux voies qui est placée sur le conduit (33) d'alimentation de chaque vérin (6) et deux gonfleurs qui sont situés au-dessus dudit convoyeur en face ledit poste de déchargement (50).

10. Machine selon l'une quelconque des revendications 3 à 9, caractérisée en ce que ledit poste (10) de déroulement du fil comporte un moteur pas à pas (16) qui entraîne une courroie crantée (19) qui passe sur une poulie de renvoi (18) et qui comporte un brin supérieur horizontal et comporte un galet presseur (20) qui appuie ledit fil (1) contre l'extrémité arrière dudit brin supérieur de ladite courroie crantée (19).

11. Machine selon la revendication 10, caractérisée en ce que ledit poste (10) de déroulement du fil comporte, en outre, une paire de galets (14a, 14b) montés fous sur leur axe, entre lesquels passe le fil (1) et l'un de ces galets est équipé d'un codeur qui délivre un nombre d'impulsions proportionnel à la longueur de fil dévidée et ladite machine comporte une unité logique de comparaison qui compare, au cours de chaque cycle dudit moteur pas à pas (16), la longueur de fil mesurée par le nombre de pas et la longueur de fil mesurée par ledit codeur pour déceler des distorsions éventuelles.

12. Machine selon la revendication 10, caractérisée en ce que ledit balancier (23) porte un contrepoids (26) à l'extrémité opposée audit galet presseur (27), que l'axe de pivotement (24) dudit balancier est entraîné en rotation par un électroaimant rotatif (25) et que ledit galet (22) d'entraînement du fil est entraîné par ledit moteur pas à pas (16) par l'intermédiaire d'une courroie crantée (22a).

13. Machine selon la revendication 3, caractérisée en ce que ledit poste (44) de sectionnement du fil comporte une platine (47) qui est déplacée perpendiculairement audit convoyeur (4) par un premier vérin (46), laquelle platine porte deux paires de biellettes (48b, 48a) articulées qui supportent un corps de vérin (60) et une mâchoire (70) reliés entre eux par des tirants (52a, 52b), formant un parallélogramme articulé et ladite platine porte une troisième paire de biellettes (53) qui engrènent avec la première paire de biellettes (48a) par des secteurs dentés (55a, 55b) et la troisième paire de biellettes porte une deuxième mâchoire (54) qui est traversée par une fente et la tige (56) du vérin porte une lame (57) qui traverse la deuxième mâchoire.

14. Machine selon la revendication 10, caractérisée en ce qu'elle comporte une unité de programmation qui commande alternativement la marche en synchronisme à même vitesse, des deux moteurs pas à pas (16, 5) pendant un nombre de pas qui correspond à l'écart angulaire entre deux paires d'étaux (16a, 16b) successives, cette phase correspondant au dévidement du bout de fil rectiligne situé entre deux boucles, puis un temps d'arrêt du moteur (5) pendant lequel l'unité de programmation commande la marche du seul moteur (16) pendant un nombre de pas correspondant à la longueur de boucle désirée et commande en même temps, un cycle de fonctionnement des divers postes (46₁, 46₂... 46ₙ de traitement et d'équipement et du poste de déchargement (50) qui sont uniformément répartis à la périphérie dudit convoyeur (3).

**Claims**

1. Process for cutting in an electric wire sections of predetermined length and for treating and equipping the two ends of said sections, process wherein the wire (1) is unwound in a rectilinear direction, loops (28) of predetermined length are formed in the unwinding wire, the two ends of which loops are held by two close together clamping devices (29a, 29b) carried by a transfer conveyor (3), characterized in that the two devices are carried by a transfer conveyor (3) which is tangential to the wire unwinding direction, said conveyor and said loops held by said clamping devices are moved up to a cutting station (44) which cuts said wire between two loops, and the two clamping devices are pivoted over a quarter turn, in directions opposite one to the other, so as to bring the two ends (45a, 45b) of each wire sections to present themselves transversely to said conveyor and to project from the periphery thereof.

2. Process according to claim 1, characterized in that the formation of loops consists in the following steps :
— closing on the wire the front clamping device (29a) of a pair of clamping devices ;
— moving the transfer conveyor (3) over a length equal to the distance between the two clamping devices (29a, 29b) of a pair, while the motor (16) of the unwinding unit runs ;
— stopping the transfer conveyor (3) ;
— pivoting a balance-bar (23) carrying a pressure roller (27) which comes in abutment against the wire part situated between the two clamping devices (16a, 16b) and which brings said wire against a drive roller (22) driven by said motor (16) ;
— and when said motor (16) has unwound the required length of loop, a programming unit controls the stop of said motor, and the fastening of the second clamping device (29b) of said pair.

3. Machine for cutting in an electric wire (1) sections of predetermined length and for treating and automatically equipping the two ends of said sections, comprising :
— a station (10) unwinding the wire in a rectilinear direction ;
— a transfer conveyor (3) carrying a pair of close together vices (6a, 6b) distributed on its periphery, which periphery is tangential to said unwinding direction, close to the front end of said unwinding station ;
— a balance-bar (23) situated at the front end of said unwinding station (10) and mounted for pivoting about an axis (24) parallel to the wire unwinding direction, said balance-bar carrying a pressure roller (27) pressing said wire (1) against a driving roller (22) to form loops ;
— a wire cutting station (44) situated perpendicularly to said conveyor (3) at the front of said unwinding section (10) ;
— and means (42, 43) for pivoting the two vices of each pair (6a, 6b) over a quarter turn, in directions opposite one to the pair after said cutting station (44) in order to pivot over a quarter turn the two ends (45a, 45b) of each loop, situated beyond said vices to cause them to pass from a tangential direction to a direction transversal to said conveyor (3) in which they project outwardly of the periphery thereof.

4. Machine according to claim 3, characterized in that said vices are mounted for pivoting about a vertical axis (7a, 7b), in that they comprise a radial arm (8) which is held by a spiral spring (38) against an abutment (9), said arm carrying a roller (41), and in that said means for pivoting the two vices are constituted by two cams (42, 43) which are placed in the part of the conveyor extending from the front end of the unwinding station (10) to the cutting station (44) and the rollers (41) of each vice rest against the cams which pivot said vices in directions opposite one to the other.

5. Machine according to any one of claims 3 and 4, characterized in that said transfer conveyor (3) is a circular plate (4) driven in rotation by a reduction gear unit (5) comprising a step-by-step motor, of which operation and stopping times are determined by a programming unit and a reducer with very diminished teeth clearance, which enable the plate to stop in determined positions with great accuracy.

6. Device according to any one of claims 3 to 5, characterized in that said vices (6) each comprise a pneumatic jack (31) with vertical axis, a vice jaw (29) carried by a rod (24) integral with the piston (32) of said jack, a spring (33) which tends to push back said piston in the retracted position in which said jaw is pressed against the bottom of said jack, means (49) for supplying said jack with compressed air, situated above said conveyor opposite the unloading station (50) of the equipped wire sections, and means (30) for emptying the compressed air contained in said jacks situated above said conveyor (3) close to the front end of the unwinding station (10).

7. Machine according to claim 6, characterized in that said supply and airing means of said jacks (31) comprise a valve (47) provided with a pusher (48) placed at the upper end of the feeding device (37) of each jack (6), two inflators (49) placed above said conductor opposite said unloading station (50) and an electromagnet (30) placed above said conveyor at the front end of the wire unwinding station (10).

8. Machine according to claim 6, characterized in that said supply and airing means of said jacks comprise a three way electrovalve placed on the feeding pipe (37) of each jack (6) and which is connected via a piping system to a source of compressed air, which is opened by said programming unit when it passes in front of unloading station (50) and which is operated by said programming unit to air said jack when it is at the front end of the vice unwinding station.

9. Machine according to claim 6, charcterized in that said supply and airing means of said jacks comprise a two way electrovalve placed on the feeding pipe (33) of each jack (6) and two inflators situated above said conveyor opposite said unloading station (50).

10. Machine according to anyone of claims 3 to 9, characterized in that said wire unwinding station (10) comprises a step-by-step motor (16) which drives a notched belt (19) which passes over a return pulley (18) and which comprises a horizontal upper end and comprises a pressure roller (20) which presses said wire (1) against the rear end of said upper end of said notched belt (19).

11. Machine according to claim 10, characterized in that said wire unwinding station (10) further comprises a pair of rollers (14a, 14b) mounted idle on their axis, between which the wire (1) passes and one of said rollers is equipped with an encoder which delivers a number of pulses proportional to the unwound length of wire and said machine comprises a logic comparison unit comparing during each cycle of said step-by-step motor (16), the length of wire measured by said encoder to detect possible distorsions.

12. Machine according to claim 10, characterized in that said balance-bar (23) carries a counterweight (26) at the opposite end of said pressure roller (27), in that the pivoting axis (24) of said balance-bar is driven in rotation by a rotary electromagnet (25), and in that said wire driving roller (22) is driven by said step-by-step motor (26) via a notched belt (22a).

13. Machine according to claim 3, characterized in that said wire cutting station (44) comprises a mechanism plate (47) which is moved perpendicularly to said conveyor (4) by a first jack (46), said plate carrying two pairs of articulated rods (48b, 48a) supporting a jack body (40) and a jaw (70) connected together by tie rods (52a, 52b) forming an articulated parallelogram and said mechanism plate carries a third pair of rods (53) mesching with the first pair of rods (48a) via toothed sectors (55a, 55b), and the third pair of rods carries a second jaw (54) which is traversed by a slot and the rod (56) of the jack carries a blade (57) traversing the second jaw.

14. Machine according to claim 10, characterized in that it comprises a programming unit controlling in alternative manner synchronously the running, at the same speed, of the two step-by-step motors (16, 5) during a number of steps which corresponds to the angular gap between two successive pairs of vices (16a, 16b), this phase corresponding to the unwinding of the rectilinear length of wire situated between two loops, then a dwell time of the motor (5) during which the programming unit controls the operation of the single motor (16) during a number of steps corresponding to the required length of loop and at the same time controls an operation cycle of the different treatment and equipment stations ($46_1$, $46_2$... $46_n$) and the unloading station (50) which are evenly distributed on the periphery of said conveyor (3).

## Patentansprüche

1. Verfahren zum Zerschneiden eines Elektro-Drahts in Abschnitte bestimmter Länge und zum Aufbereiten und Ausstatten der beiden Enden der Abschnitte, bei welchem Verfahren der Draht (1) in gerader Richtung abgewickelt wird, im Verlauf des Abwickelns im Draht Schleifen (28) von bestimmter Länge gebildet werden, deren beide Enden von zwei von einer Fördereinrichtung (3) getragenen, nahe beieinander befindlichen Klemmeinrichtungen (29a, 29b) gehalten werden, dadurch gekennzeichnet, daß die beiden Einrichtungen von einer Fördereinrichtung getragen werden, die die Abwickelrichtung des Drahts tangiert, man den Förderer und die von den Klemmeinrichtungen gehaltenen Schleifen bis zu einer Abtrennstation (44) vorrücken läßt, welche den Draht zwischen zwei Schleifen schneidet, und man die beiden Klemmeinrichtungen um eine Vierteldrehung in zueinander entgegengesetzter Richtung schwenken läßt, sodaß die beiden Enden (45a, 45b) jedes Drahtabschnitts quer zum Förderer zu liegen kommen und über den Umfang desselben vorstehen.

2. Verfahren nach Anspruch 1, dadurch gekennzeichnet, daß die Bildung der Schleifen folgende Schritte umfaßt :

— man schließt die vordere (29a) von einem Paar Klemmeinrichtungen über dem Draht ;

— man läßt die Fördereinrichtung (3) um eine Länge, die gleich dem Abstand zwischen den beiden Klemmeinrichtungen (29a, 29b) eines Paars ist, während des Drehens des Motors (16) der Abwickeleinheit vorrücken ;

— man stoppt die Fördereinrichtung (3) ;

— man verschwenkt einen Hebel (23), der eine Anpreßrolle (27) trägt, welche an dem zwischen den beiden Klemmeinrichtungen (29a, 29b) befindlichen Drahttrum zur Anlage kommt und den Draht zu einer vom Motor (16) angetriebenen Antriebsrolle (22) führt ;

— und man steuert, wenn der Motor (16) die gewünschte Schleifenlänge abgewickelt hat, mit einer Programmierungseinheit den Stopp des Motors und die Schließung der zweiten Klemmeinrichtung (29b) des Paars.

3. Maschine zum Zerschneiden eines elektrischen Drahts (1) in Abschnitte bestimmter Länge und zum automatischen Aufbereiten und Ausstatten der beiden Enden der Abschnitte, mit einer Station (10) zum Abwickeln des Drahts in gerader Richtung, gekennzeichnet durch :

— eine Fördereinrichtung (3), die an ihrem Umfang verteilte, nahe beieinander befindliche Spannstockpaare (6a, 6b) trägt, welcher Umfang von der Abwickelrichtung tangiert ist, u. zw. in der Nähe des vorderen Endes der Abwickelstation ;

— einen am vorderen Ende der Abwickelstation (10) angeordneten und schwenkbar um eine zur Abwickelrichtung des Drahts parallele Achse (24) gelagerten Hebel (23), welcher ein Anpreßrolle (27) trägt, die den Draht (1) zur Bindung von Schleifen an eine Antriebsrolle (22) drückt ;

— eine Draht-Abtrennstation (44), die senkrecht zum Förderer (3) vor der Abwickelstation (10) angeordnet ist ;

— und Mittel (42, 43) zum Verschwenken der beiden Spannstöcke jedes Paars (6a, 6b) um eine Vierteldrehung in zueinander entgegengesetzter Richtung nach der Abtennstation (44) zum Verschwenken der beiden jenseits der Spannstöcke befindlichen Enden (45a, 45b) jeder Schleife um eine Vierteldrehung, um sie aus einer Tangentialrichtung in eine quer zum Förderer (3) liegende Richtung zu ringen, in welcher sie an der Außenseite über den Umfang des Förderers vorstehen.

4. Maschine nach Anspruch 3, dadurch gekennzeichnet, daß die Spannstöcke um eine vertikale Achse (7a, 7b) schwenkbar gelagert sind, daß sie einen radialen Arm (8) umfassen, der mittels einer Spiralfeder (38) gegen einen Anschlag (9) gedrückt gehalten ist und eine Rolle (41) trägt, und daß die Mittel zum Verschwenken der Spannstöcke durch zwei Nockenscheiben (42, 43) gebildet sind, die in dem Teil des Förderers angeordnet sind, der sich vom vorderen Ende der Abwickelstation (10) bis zur Abtrennstation (44) erstreckt, und die Rollen (41) jedes Spannstocks in Anlage an den Nockenscheiben kommen, die die Spannstöcke in zueinander entgegengesetzte Richtung schwenken lassen.

5. Maschine nach einem der Ansprüche 3 und 4, dadurch gekennzeichnet, daß die Fördereinrichtung (3) eine kreisförmige Platte (4) ist, die durch eine Gruppe Getriebemotor (5) mit Schrittmotor, dessen Betriebs- und Ruhezeiten durch eine Programmiereinheit bestimmt sind, und einem Untersetzungsgetriebe mit sehr reduziertem Normalspiel zur Ermöglichung eines Stopps der Platte in festgelegten Positionen mit sehr großer Präzision, rotationsbetrieben ist.

6. Vorrichtung nach einem der Ansprüche 3 bis 5, dadurch gekennzeichnet, daß die Spannstöcke (6) jeweils einen Pneumatikzylinder (31) mit vertikaler Achse, eine von einer zum Kolben (32) des Zylinders gehörigen Stange (34) getragene Spannstockbacke (29), eine den Kolben in die eingezogene Stellung, in der die Backe gegen den Boden des Zylinders geklemmt ist, zwingende Feder (33), Mittel (49) zum Speisen des Zylinders mit Druckluft, die oberhalb des Förderers (3) gegenüber der Austragsstation (50) für die bestückten Drahtabschnitte angeordnet sind, und Mittel (30) zum Entleeren der in den Zylindern enthaltenen Druckluft, die sich über dem Förderer (3) in Nähe des vorderen Endes der Abwickelstation (10) befinden, umfassen.

7. Maschine nach Anspruch 6, dadurch gekennzeichnet, daß die Mittel zum Speisen und unter Atmosphäresetzen der Zylinder (31) ein Ventil (47), das mit einem am oberen Ende der Speiseleitung (37) jedes Zylinders (6) befindlichen Stößel (48) versehen ist, zwei oberhalb des Förderers gegenüber der Austragsstation (50) angeordnete Luftpumpen (49) und einen oberhalb des Förderers am vorderen Ende der Abwickelstation (10) des Drahts vorgesehenen Elektromagneten (30) umfassen.

8. Maschine nach Anspruch 6, dadurch gekennzeichnet, daß die Mittel zum Speisen und unter Atmosphäresetzen der Zylinder ein Dreiweg-Elektroventil, das an der Speiseleitung (37) jedes Zylinders (6) angeordnet und urch eine Kanalleitung mit einer Druckluftquelle verbunden ist, umfassen, welches durch die Programmiereinheit geöffnet wird, wenn es vor der Austragsstation (50) vorbeikommt, und zum unter Atmosphäresetzen des Zylinders, wenn es sich am vorderen Ende der Draht-Abwickelstation befindet, durch die Programmierungseinheit manövriert wird.

9. Maschine nach Anspruch 6, dadurch gekennzeichnet, daß die Mittel zum Speisen und unter Atmosphäresetzen der Zylinder ein Zweiweg-Elektroventil, das an der Speiseleitung (37) jedes Zylinders (6) angeordnet ist, und zwei Luftpumpen, die oberhalb des Förderers gegenüber der Austragsstation (50) angeordnet sind, umfassen.

10. Maschine nach einem der Ansprüche 3 bis 9, dadurch gekennzeichnet, daß die Draht-Abwickelstation (10) einen Schrittmotor (16) umfaßt, der einen Zahnriemen (19) antreibt, welcher über eine Umlenktrommel (18) läuft und ein horizontales oberes Trum aufweist, und eine Anpreßrolle (20) umfaßt, die den Draht (1) gegen das hintere Ende des oberen Trums des Zahnriemens (19) drückt.

11. Maschine nach Anspruch 10, dadurch gekennzeichnet, daß die Draht-Abwickelstation (10) weiters ein Paar lose an ihrer Achse gelagerte Rollen (14a, 14b) umfaßt, zwischen welchen der Draht (1) durchläuft, wobei eine dieser Rollen mit einem eine zur Länge des abgewickelten Drahtes proportionale Anzahl an Impulsen abgebenden Codierer ausgestattet ist, und die Maschine eine logische Vergleichseinheit umfaßt, die während jedes Zyklus' des Schrittmotors (16) die durch die Schrittanzahl gemessenen Drahtlänge und die vom Codierer gemessene Drahtlänge zum Aufdecken eventueller Verwindungen vergleicht.

12. Maschine nach Anspruch 10, dadurch gekennzeichnet, daß der Hebel (23) an dem der Anpreßrolle (27) gegenüberliegenden Ende ein Gegengewicht (26) trägt, daß die Schwenkachse (24) des Hebels durch einen drehbaren Elektromagneten (25) rotationsbetrieben ist und daß die Drahtantriebsrolle (22) mittels eines Zahnriemens (22a) vom Schrittmotor (16) angetrieben ist.

13. Maschine nach Anspruch 3, dadurch gekennzeichnet, daß die Draht-Abtremstation (44) eine senkrecht zum Förderer (4) mittels eines ersten Zylinders (46) verschiebbare Halteplatte (47) umfaßt, welche zwei Paar Gelenklaschen (48b, 48a) trägt, die einen Zylinderkörper (60) und eine Backe (70) tragen, wleche durch ein Gelenkparallelogramm bilbende Zugstangen (52a, 52b) miteinander verbunden sind, und die Halteplatte ein drittes Paar Gelenklaschen (53) trägt, die mittels Zahnabschnitten (55a, 55b) in das erste Paar Gelenklaschen (48a) eingreifen, und das dritte Paar Gelenklaschen eine von einem Schlitz durchzogene zweite Backe (54) und die Stange (56) des Zylinders ein die zweite Backe durchsetzendes Blatt (57) aufweisen.

14. Maschine nach Anspruch 10, dadurch gekennzeichnet, daß sie eine Programmiereinheit umfaßt, die abwechselnd den Synchronbetrieb der beiden Schrittmotoren (16, 5) während einer Schrittanzahl, die dem Winkelabstand zwischen zwei aufeinanderfolgenden Spannstockpaaren (6a, 6b) entspricht, bei gleicher Geschwindigkeit steuert, wobei diese Phase dem Abwickeln des Endes des zwischen zwei Schleifen befindlichen gareden Drahts entspricht, und dann einen Stillstand des Motors (5), während welchem die Programmiereinheit den Betrieb nur des Motors (16) während einer Schrittanzahl, die der gewünschten Schleifenlänge entspricht, und gleichzeitig einen Ablaufzyklus der verschiedenen Stationen (46$_1$, 46$_2$.... 46$_n$) zur Aufbereitung und Ausstattung und der Austragsstation (50), welche gleichmäßig über den Umfang des Förderers (3) verteilt sind, steuert.

# Fig.1

# Fig.2

# Fig.9

# Fig.3

0 076 773

Fig. 5

49

48

47

38

37

36

4

6

1

29

31

32

33

34

9

8

41

Fig. 6

34

29

35

Fig. 4

8

39

9

V

V

40

7

Fig.7

Fig.8